# EUROPÄISCHE PATENTSCHRIFT

(11) **EP 0 403 793 B1**
(45) Veröffentlichungstag und Bekanntmachung des Hinweises auf die Patenterteilung: **09.06.1993**
(21) Anmeldenummer: 90109195.9
(22) Anmeldetag: 16.05.1990
(51) Int. Cl.: B65G 47/88

(54) **Bremsvorrichtung für auf Gefässförderern transportierten Gefässen**
Braking device for receptacles conveyed on receptacle-conveyors
Dispositif de frein pour des récipients transportés sur des transporteurs de récipient

(30) Priorität: 21.06.1989 DE 3920291
(43) Veröffentlichungstag der Anmeldung: 27.12.1990
(73) Patentinhaber: KHS Maschinen- und Anlagenbau Aktiengesellschaft, D-44143 Dortmund (DE)
(72) Erfinder: Rademacher, Friedrich, D-4618 Kamen-Südkamen (DE); Finger, Andreas, D-4630 Bochum (DE)

(56) Entgegenhaltungen:
- DE-A- 3 015 203
- DE-A- 3 740 014

## Beschreibung

Die Erfindung bezieht sich auf eine Bremsvorrichtung für auf Gefäßförderern transportierten Gefäßen, enstrepench dem Oberbegriff des Patentanspruchs 1.

Solche Bremsvorrichtungen finden sich insbesondere im Einlaufbereich von Gefäßbehandlungsmaschinen mit der Aufgabe, bei Störungen im Auslaufbereich dieser Maschine oder dgl. den weiteren Zulauf von Gefäßen kurzfristig zu unterbinden. Der Gefäßförderer selbst kann, in einem solchen Falle ohne weiteres durchlaufen, so daß zu dessen Ansteuerung keine besonderen Maßnahmen getroffen werden müssen. Eine derartige Bremsvorrichtung ist beispielweise aus der DE-A-30 15 203 bekannt. Diese Bremsvorrichtung weist ein beweglich an einem Tragorgan gelagertes Sperrglied auf, das mittels eines Betätigungsorganes in einer den Förderweg blockierenden Stellung feststellbar ist, wobei das Tragorgan entlang des Förderweges beweglich gelagert ist und mit einem seine Bewegung in Förderrichtung hemmenden Dämpfungsorgan in Verbindung steht. Als Sperrglied ist ein Sternrad vorgesehen, welches ständig von den vorbeibewegten Gefäßen mitbewegt wird. Sobald die Sperrung des Gefäßstromes erforderlich ist, wird dieses Sternrad durch einem Bremsstift blockiert, worauf der im Gefäßstrom anstehende Staudruck diesen Stern entgegen der Wirkung des Dämpfungsorgans weiterbewegt. Durch das plötzliche Einfahren der Sperre und damit ein sofortiges Abstoppen des Sternrades wird bei dieser bekannten Vorrichtung der erste Bremvorgang des Gefäßstromes praktisch ruckartig ausgelöst, der dann durch Ansprechen des Dämpfungsorgans verzögert ausgeführt wird. Trotz des die Vorrichtung aufnehmenden Dämpfungsorgans werden also erhebliche ruckartige Schläge auf den Gefäßstrom gebracht, wobei diese insgesamt auf die Bremsvorrichtung wirkenden Kräfte abhängig von dem nachfolgenden Staudruck und der Leistung des Gefäßförderers sind. Insbesondere bei hohen Leistungen ist diese Vorrichtung nicht mehr mit Zufriedenheit einsetzbar. Hinzu kommt, daß insbesondere nach Lösen der Sperre des Sternrades die vordereren Flaschen sofort freigelassen und auf Maximalgeschwindigkeit, d. h. auf die Geschwindigkeit des Gefäßtransporteurs, beschleunigt und weiter transportiert werden. Hierbei tritt zwangsläufig immer wieder ein Kippen der vorderern Gefäße auf, die dann zu erheblichen Störungen in der nachfolgenden Einteilschnecke oder eines sonstigen Einteilorganes führen.

Ferner ist aus der DE-A-37 40 014 eine mechanische Bremsvorrichtung bekannt geworden, bei welcher ein Steuerelement mit einer Geschwindigkeit bewegt wird, die geringer als die Geschwinkigkeit des Förderbandes ist. Dabei wird ein darauf angeordnetes Sternrad allmählich in die Förderbahn der Flaschen eingeführt, die dabei auf das blockierte, sich langsamer vorwärts bewegende Sternglied auflaufen. Die Sperrvorrichtung bewegt sich deutlich geringer als die Transportgeschwindigkeit der Flaschen, was zwangsläufig zu erheblichen Auflaufgeräuschen führt. Hinzu kommt, daß das Sternrad allmählich in die Förderbahn der Flaschen eingeführt wird. Hierbei können Flaschen, die nicht voll von dem Sternrad erfaßt werden, an diesem vorbeilaufen und ebenfalls erhebliche Geräusche verursachen. Sobald das Sternrad den Weg der Flaschen versperrt, sind diese bereits so stark abgebremst und erzeugen dadurch einen erheblichen Staudruck, der bei entlastetem Zylinderraum der Bremseinrichtung zu einem schnellen Stop führt. Anschließend verläßt das Sternrad wieder die Bewegungsbahn der Flaschen, so daß diese ruckartig anlaufen und praktisch sofort beschleunigt werden.

Ausgehend von dieser aus der DE-A-3740 014 bekannten Vorrichtung liegt der Erfindung die Aufgabe zugrunde, eine feinfühlige und auch für hohe Leistungsbereiche geeignete Bremsvorrichtung zu schaffen, mit welcher ein gesteuertes Einführen des Sperrorgans in den Gefäßstrom, dann ein kontinuierliches Abbremsen des Gefäßstromes unabhängig vom Staudruck und schließlich ein gesteuertes Beschleunigen des Gefäßstromes unter Vermeidung einer ruckartigen Trennung des Sperrkörpers von den Gefäßen gewährleistet ist. Gleichzeitig soll eine Reihenbildung der wieder anlaufenden Gefäße vor einer nachfolgenden Einteilstation durch die Bremsvorrichtung möglich sein.

Diese Aufgabe wird erfindungsgemäß durch die im Kennzeichen des Patentanspruchs 1 angegebenen Merkmale gelöst.

Mit einer derartigen erfindungsgemäßen Bremsvorrichtung werden die ankommenden Gefäße ungeachtet der Geschwindigkeit zunächst mit dem Sperrkörper in Verbindung gebracht, und, sobald der entsprechende Kontakt gegeben ist, kontinuierlich entlang einer gleichbleibenden vorbestimmbaren Wegstrecke abgebremst. Dieser Bremsvorgang findet ohne irgendeine ruckartige oder sonstwie den Flaschenstrom störend beeinflussende Sperrwirkung des Sperrkörpers statt. Dabei fügt sich der Sperrkörper jeder beliebigen Flaschen- oder Gefäßformation an, ohne daß irgendwelche Anpassungs- oder Austauscharbeiten für den mitlaufenden Sperrkörper bzw. Sperrstern erforderlich werden. Der gesamte Staudruck auf dem Gefäßförderer, verursacht durch die Länge der anstehenden abzubremsenden Gefäßreihe, spielt dabei keine Rolle, da der Bremsweg auch in Abhängigkeit dieser Parameter beliebig einstell- und veränderbar ist.

In selbständiger Ausbildung der Erfindung wird ferner bei einer Vorrichtung gemäß den Merkmalen des Hauptanspruches vorgeschlagen, daß der Sperrkörper an umlaufenden Ketten und/oder Führungsteilen befestigt und bei gefordeter Bremswirkung aus seiner Ruheposition in den Gefäßstrom einführbar und mit Erreichen einer der endgültigen Sperrposition vorgelagerten zweiten Position kontinuierlich abbremsbar ansteuerbar an dem Gefäßförderer gelagert ist.

Mit dieser Ausbildung ist praktisch eine beliebige Einstellung der einzelnen Anlauf-, Brems, und Verzögerungspositionen gemessen an den sich jeweils ändernden Staudruckverhältnissen auf solchen Gefäßförderern möglich.

Eine vorteilhafte Weiterbildung der Erfindung zeichnet sich dadurch aus, daß der Sperrkörper aus seiner Ruheposition entlang dem Gefäßstrom, jedoch dazu auf Abstand beschleunigbar bei annähernd gleicher Geschwindigkeit zwischen die Gefäße einfahrbar, mit diesen vorbewegbar und damit kontinuierlich abbremsbar an dem Gefäßförderer gelagert und anschließend mit den Gefäßen beschleunigbar ist. Als besonders zweckmäßig hat es sich dabei herausgestellt, daß der Sperrkörper nach Aufhebung des Sperrsignals von seinem Haltepunkt unter kontinuierlicher Beschleunigung ein vorbestimmbares Wegstück mit den Gefäßen mitführbar ist und diese entsprechend der Teilung einer nachgeschalteten Einteilvorrichtung teilungsgerecht bzw. in einer geschlossenen Reihe zuführt.

Mit dieser Ausgestaltung ist der Vorteil gegeben, daß trotz Lösen des Sperrkörpers die Gefäße nicht wahllos dem Gefäßförderer übergeben, also aus dem Stand auf dessen Geschwindigkeit beschleunigt werden müssen, sondern vielmehr kontinuierlich auf dessen Geschwindigkeit gebracht und so automatisch einer nachgeschalteten Einteilvorrichtung, einer Einteilschnecke oder dgl. praktisch teilungsgerecht und/oder geschlossen zugeführt werden. Eine solche teilungsgerechte Zuführung kann noch dadurch verbessert werden, daß die jeweilige Endposition des Sperrkörpers während des Bremsvorganges exakt im Verhältnis zu dieser Einteilvorrichtung vorgegeben wird bzw. bemessen ist.

Zweckmäßig ist der Sperrkörper an einer anlaufenden, von Umlenkrädern aufgenommenen endlosen Kette befestigt und dabei mindestens ein Umlenkrad mit einer ansteuerbaren Antriebs- und Bremsvorrichtung gekoppelt. Dieses hat den Vorteil, daß die Ansteuerung des Sperrkörpers sowohl zu dessen Beschleunigung als auch zu dessen Verzögerung in beliebiger Weise entsprechend den Verhältnissen auf dem Gefäßförderer sowohl geschwindigkeits- als auch kräftemäßig vorgenommen werden kann. Eine unmittelbare Verwertung solcher Signale kann bekannterweise durch Rechner erfolgen, der dann die Antriebs- und Bremsvorrichtung ansteuert.

Zweckmäßig werden dabei die einzelnen Positionen des Sperrkörpers durch einstellbare Positionsmelder überwacht, die ihrerseits ein Signal abgeben, welches zur Auswertung und Ansteuerung der Arbeitssignale dienen kann.

In einfacher Weise ist dabei die Sperrvorrichtung und/oder deren Trägerkette mit einem umlaufenden Signalgeber ausgestattet, der über ortsfeste Signalnehmer die entsprechende Position der Sperrvorrichtung einer solchen Steuervorrichtung und oder einem Rechner vermitteln kann.

Durch Eingliederung eines Rechners kann auf diese Weise jede beliebige Situation auf dem Gefäßförderer berücksichtigt und für die Verzögerungs, Brems- und Beschleunigungsvorgänge der Bremsvorrichtung verwertet werden, so daß immer, ungeachtet der Umgebungsverhältnisse im Gefäßförderbereich, optimale Maßnahmen zur Abbremsung und anschließenden Beschleunigung des Gefäßstromes gewährleistet sind.

Nachfolgend wird die Erfindung anhand eines in der Zeichnung dargestellten Ausführungsbeispiels näher erläutert. In der Zeichnung zeigt:
- Fig. 1: eine Draufsicht auf die Bremsvorrichtung mit einem daneben befindlichen Gefäßförderer und
- Fig. 2: Einzelheiten der Bremsvorrichtung im Querschnitt.

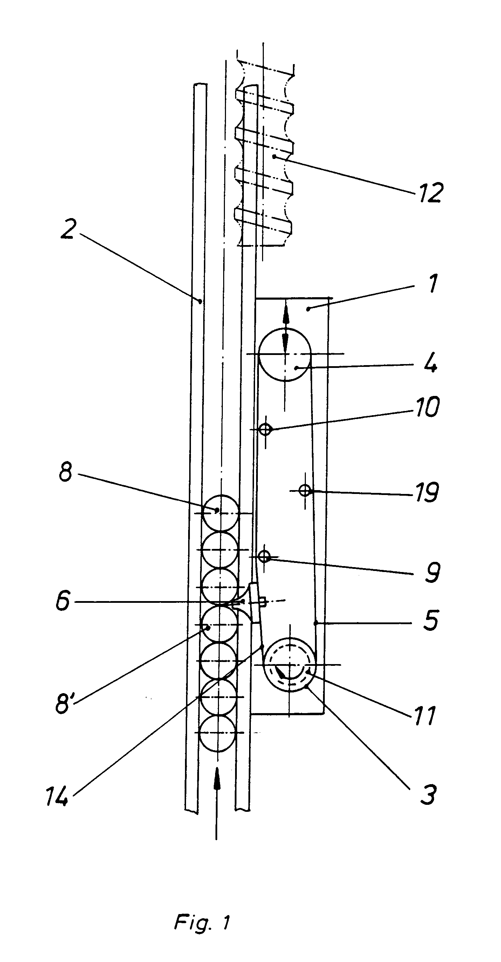

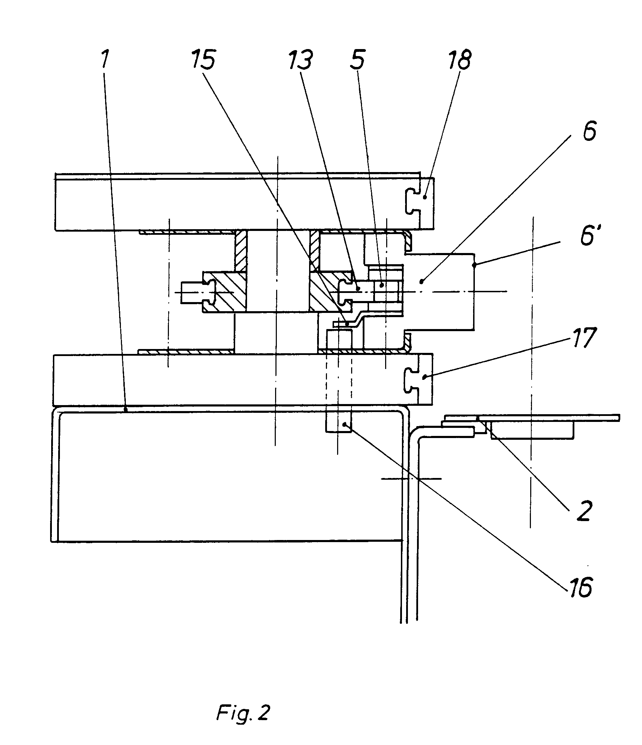

Gemäß dem in Fig. 1 dargestellten Ausführungsbeispiel besteht die Bremsvorrichtung aus einer Tragplatte 1, die an einem Gefäßförderer 2 befestigt oder diesem zugeordnet ist. Die Tragplatte 1 nimmt Umlenkräder 3, 4 auf, die ihrerseits eine umlaufende Kette 5 antreiben. An dieser Kette 5 ist mindestens ein Sperrkörper 6 befestigt, der aus seiner Ruheposition 19 gegenüber und seitlich der Gefäßförderbahn 2 annähernd auf die Geschwindigkeit der herangeförderten Gefäße 8 beschleunigbar ist. Die Geschwindigkeit dieser Gefäße 8 kann auf verschiedene Art und Weise genauestens ermittelt bzw. stetig signalisiert werden, wobei dieses Signal auch zur Ansteuerung einer Antriebsvorrichtung und Beschleunigung des Sperrkörpers 6 dient, so daß dieser praktisch nach einer gewissen Beschleunigungsstrecke gegen die Gefäße 8 bewegt und in eine Gefäßlücke, also zwischen zwei aneinanderstehenden Gefäßen, einführbar ist. Im Bereich dieser Strecke ist der Sperrkörper ausweichbar geführt, um ein störungsfreies Einfügen in eine Gefäßlücke sicherzustellen. Mit Erreichen einer seiner endgültigen Sperrposition vorgelagerten zweiten Position 9, die den vollständigen Einfügungsgrad des Sperrkörpers in die Gefäßlücke darstellt, wird letztlich der Sperrkörper abgebremst und innerhalb einer bestimmten Strecke, die durch die dritte Position 10 begrenzbar ist, gestoppt. Diese zweite Position 10 liegt zwischen den beiden Umlenkrädern 3 und 4, wodurch der Sperrkörper 6 nach Aufhebung des Sperrsignals von dem Haltpunkt 10 unter kontinuierlicher Beschleunigung ein vorbestimmbares Wegstück bis hin zu dem Umlenkrad 4 mit den Gefäßen 8 mitführbar ist. Auf diese Weise können die von dem Sperrkörper 6 gehaltenen Gefäße entsprechend der Teilung einer nachgeschalteten Einteilvorrichtung teilungsgerecht zugeführt und störungsfrei nach dem Stoppvorgang wieder beschleunigt werden. Anschließend wird der Sperrkörper 6 in seine Ruheposition 19 verfahren. Mindestens ein Umlenkrad 3, 4 ist bei dieser Vorrichtung mit einer ansteuerbaren Antriebsvorrichtung 11 sowie einer entsprechend ansteuerbaren Bremsvorrichtung koppelbar, mit welchem die entsprechenden Geschwindigkeiten und Verzögerungen in Abhängigkeit von dem Stoppsignal der vorgeschalteten Maschine selbstständig eingeleitet und durchgeführt werden können. Es ist aber auch denkbar, eine enstprechende Kopplung eines Umlenkrades mit einer als Einteilschnecke ausgebildeten Einteilvorrichtung 12 vorzusehen, deren Verbindung durch entsprechende Kupplungsstücke voneinander getrennt werden kann, so daß bei weiterlaufender Maschine unabhängig davon auch ein Bremssignal der Bremsvorrichtung zugegeben werden kann und auf diese Weise die Gefäße 8 innerhalb des vorgegebenen Bremsweges abgestoppt werden können. Gemäß dem in Fig. 2 dargestellten Ausführungsbeispiel ist der Sperrkörper 6 an einer kette 5 befestigt, die an Gleitleisten 13 in entsprechender Weise entlang dem Gefäßförderer 2 geführt ist. Dabei ist die Einlaufstrecke 14 zur Einfügung des Sperrkörpers 6 allmählich schräg in Richtung des Gefäßförderers 2 gerichtet, so daß ein entsprechend feinfühliges Einfügen der Sperrkörperspitze 6 gegen die Gefäße 8 bzw. in eine Gefäßlücke möglich ist. An der Kette 5 ist eine Kontaktleiste 15 als Kontaktgeber angeordnet, die über entsprechend ortsfeste Signalnehmer 16, beispielsweise Näherungsinitiatoren, hinwegführbar ist und somit die entsprechende Position des Sperrkörpers 6 einer nicht weiter dargestellten Steuervorrichtung oder einem Rechner vermittelt. Von diesen wird die Ansteuerung der Antriebsvorrichtung sowie der Bremsvorrichtung gegebenenfalls in Abhängigkeit der jeweiligen Gefäßfördergeschwindigkeit vorgenommen. Im oberen und unteren Förderbereich sind entlang der Gefäßförderbahn Führungsschienen 17, 18 vorgesehen, die mit einem gegenüberliegenden Geländer des Gefäßförderers 2 eine Förderspur bilden, aus denen praktisch ein Entweichen der Gefäße nicht möglich ist und so ein einwandfreier Zugriff des Sperrkörpers 6 zu der anzuhaltenden Gefäßreihe sichergestellt ist. Die den Umlenkrädern 3, 4 bzw. einem Umlenkrad 3 zugeordnete Bremsvorrichtung 11 kann in ihrer Bremswirkung von der Fördergeschwindigkeit bzw. dem dabei hervorgerufenen Staudruck eingestellt werden, so daß praktisch gleiche Bremswege zwischen den Positionen 9 und 10 erzielbar sind. Ungeachtet dessen kann jedoch auch eine Überschreitung des Punktes 10 in Förderrichtung gewählt werden. Diese hat praktisch keinen Einfluß auf die in allen Bewegungsphasen gegebene ruckfreie Positionierung der am Sperrkörper 6 anliegenden Gefäße.

Nach einer anderen, nicht dargestellten Variante kann der Sperrkörper 6 auch an einem Linearschlitten längs der Förderbahn 2 vor- und zurückfahrbar gelagert sein.

Dabei wird der Sperrkörper 6 durch den Linearschlitten zunächst in etwa auf die Gefäßfördergeschwindigkeit beschleunigt und darauf gegen die Gefäße 8 in eine Lücke geführt. Anschließend werden die Gefäße 8 abgebremst und nach Aufheben des Stoppsignals 8 gegebenenfalls wieder beschleunigt, worauf der Linearschlitten in seine Ausgangslage außerhalb der Gefäßbahn zurückgeführt wird.

Als Linearschlitten können auch elektrisch, pneumatisch, hydraulisch oder dgl. angetriebene Kolben-Zylinder-Elemente usw. verwendet werden. Dabei kann der Linearschlitten durch seitliches Verschwenken in Richtung der Gefäßförderbahn den Sperrkörper 6 gegen die Gefäße bewegen. Die Entfernung des Sperrkörpers 6 bei dessen Rückbewegung erfolgt dann in umgekehrter Weise.

## Patentansprüche

1. Bremsvorrichtung für auf Gefäßförderern transportierten Gefäßen, bestehend aus einem aus seiner Ruhepostion entlange dem Gefäßstrom, jedoch dazu auf Abstand, beschleunigbaren und zwischen die Gefäße einführbaren Sperrkörper, der mit den Gefäßen vorbewegbar und abbremsbar an dem Gefäßförderer gelagert ist, dadurch gekennzeichnet, daß der Sperrkörper (6) auf der Geschwindigkeit der Gefäße (8, 8') beschleunigbar ist, bevor er in Lücken zwischen diese eingeführt wird, und nach dem kontinnieslichen Abbremsen mit den Gefäßen (8, 8') beschleunigbar ist, ehe er die Lücke zwischen diesen verläßt und in seine Ruheposition zurückkehrt.

2. Bremsvorrichtung nach Anspruch 1, dadurch gekennzeichnet, daß der Sperrkörper (6) an umlaufenden Ketten (5) und/oder Führungsteilen befestigt und bei geforderter Bremswirkung aus seiner Ruheposition (19) in den Gefäßstrom einführbar und mit Erreichen einer der endgültigen Sperrposition (10) vorgelagerten zweiten Position (9) kontinuierlich abbremsbar ansteuerbar an dem Gefäßförderer (2) gelagert ist.

3. Bremsvorrichtung nach den Ansprüchen 1 und 2, dadurch gekennzeichnet, daß der Sperrkörper (6) nach Aufhebung des Sperrsignals von seinem Haltepunkt unter kontinuierlicher Beschleunigung ein vorbestimmbares Wegstück mit den Gefäßen (8) mitführbar ist und diese entsprechend der Teilung einer nachgeschalteten Einteilvorrichtung (12) teilungsgerecht und/oder in einer geschlossenen Formation zuführt.

4. Bremsvorrichtung nach Anspruch 1, dadurch gekennzeichnet, daß der Sperrkörper (6) an einer umlaufenden, von Umlenkrädern (3, 4) aufgenommenen endlosen Kette (5) befestigt ist und mindestens ein Umlenkrad (3) mit einer ansteuerbaren Antriebs- und Bremsvorrichtung (11) koppelbar ist.

5. Bremsvorrichtung nach den vorhergehenden Ansprüchen, dadurch gekennzeichnet, daß die einzelnen Positionen (9, 10, 19) des Sperrkörpers (6) durch einstellbare Positionsmelder (16) überwacht und diese zur Ansteuerung der Arbeitssignale dienen.

6. Bremsvorrichtung nach Anspruch 5, dadurch gekennzeichnet, daß die Sperrvorrichtung (6) und/oder deren Trägerkette (5)mit einem umlaufenden Signalgeber (15) ausgestattet ist, der über ortsfeste Signalnehmer (16) die entsprechende Position (9, 10, 19) der Sperrvorrichtung (6) einer Steuervorrichtung und/oder einem Rechner vermittelt.

7. Bremsvorrichtung nach den Ansprüchen 1 und 2, dadurch gekennzeichnet, daß der Sperrkörper (6) an einem Linearschlitten längs der Förderbahn (2) vor- und zurückführbar geführt ist.

8. Bremsvorrichtung nach Anspruch 7, dadurch gekennzeichnet, daß der Linearschlitten mit dem Sperrkörper (6) zurück beschleunigbar, diesen dann gegen die Gefäße (8, 8') führt und die auf diese Weise übernommene Gefäßreihe abbremst, gegebenenfalls wieder beschleunigt und dann in seine Ausgangsalge zurückbewegbar ist, wobei dann der Sperrkörper (6) außerhalb der Gefäßbahn zurückgeführt wird.

## Claims

1. Braking device for receptacles, which are conveyed on receptacle conveyors, comprising a blocking means, which is acceleratable from its inoperative position along the flow of receptacles, but with a spacing therefrom, and is insertable between the receptacles, said blocking means being mounted, with the receptacles, on the receptacle conveyor so as to be advanceable and retardable, characterised in that the blocking means (6) is acceleratable to the speed of the receptacles (8, 8') before it is inserted into gaps between said receptacles, and said blocking means is acceleratable with the receptacles (8, 8'), after continuous retardation, before it leaves the gap between said receptacles and returns to its inoperative position.

2. Braking device according to claim 1, characterised in that the blocking means (6) is secured on circulatory chains (5) and/or guide members and, with the required braking action, is insertable into the flow of receptacles from its inoperative position (19) and, when a second position (9) is reached, which precedes the definitive blocking position (10), said blocking means is mounted on the receptacle conveyor (2) so as to be actuatable in a continuously retardable manner.

3. Braking device according to claims 1 and 2, characterised in that the blocking means (6) is entrainable with the receptacles (8) over a predetermined distance from its retaining point with continuous acceleration, after the blocking signal has been cancelled, and supplies said receptacles in accordance with the calibration of a subsequently connected grading device (12) true to calibration and/or in a closed formation.

4. Braking device according to claim 1, characterised in that the blocking means (6) is secured on an endless, circulatory chain (5), which is received by guide wheels (3, 4), and at least one guide wheel (3) is connectable to an actuatable driving and braking device (11).

5. Braking device according to the preceding claims, characterised in that the individual positions (9, 10, 19) of the blocking means (6) are monitored by adjustable position indicators (16), and the latter serve to actuate the operating signals.

6. Braking device according to claim 5, characterised in that the blocking means (6) and/or its supporting chain (5) are/is provided with a circulatory signal transmitter (15), which transmits the appropriate position (9, 10, 19) of the blocking means (6) to a control device and/or a computer via stationary signal receivers (16).

7. Braking device according to claimn 1 and 2, characterised in that the blocking means (6) is guided on a linear slide longitudinally of the conveyor belt (2) so as to be guidable in a reciprocating manner.

8. Braking device according to claim 7, characterised in that the linear slide is acceleratable backwardly with the blocking means (6), then it guides said blocking means towards the receptacles (8, 8') and retards the row of receptacles, which has been acquired in this manner, said linear slide is optionally accelerated again and is then returnable into its starting position, the blocking means (6) then being guided back externally of the receptable path.

## Revendications

1. Dispositif de freinage pour des récipients transportés sur des convoyeurs, constitué d'un corps de blocage à accélérer à partir de sa position de repos, le long de flux des récipients, mais à une certaine distance de celui-ci et à introduire entre les récipients, lequel corps de blocage est monté de manière à pouvoir avancer et à être freiné avec les récipients sur le convoyeur, caractérisé en ce que le corps de blocage (6) peut être accéléré à la vitesse des récipients (8, 8'), avant d'être introduit dans des espaces libres entre ceux-ci et peut être accéléré avec les récipients (8, 8'), après freinage continu, avant de quitter les espaces libres entre ceux-ci et de retourner dans sa position de repos.

2. Dispositif de freinage selon la revendication 1, caractérisé en ce que le corps de blocage (6) est fixé sur des chaînes (5) circulant et/ou des éléments de guidage et est monté sur le convoyeur (2), de manière à pouvoir être introduit dans le flux des récipients à partir de sa position de repos (19), lorsqu'un effet de freinage est exigé et peut être commandé, de façon freiné en continu, lorsqu'est atteinte une deuxième position (9), située en amont de la position de blocage (10) définitive.

3. Dispositif de freinage selon les revendications 1 et 2, caractérisé en ce qu'après suppression du signal de blocage, le corps de blocage (6) peut être guidé avec les récipients (8), à partir de son point d'arrêt, par accélération continue, sur une distance prédéterminée et achemine ces récipients, en fonction du pas de division d'un dispositif de distribution (12) monté en aval, conformément au pas de division et/ou dans une formation fermée.

4. Dispositif de freinage selon la revendication 1, caractérisé en ce que le corps de blocage (6) est fixé sur une chaîne (5) sans fin, circulant passant sur des poulies de renvoi (3, 4) et en ce qu'une poulie de renvoi (3) au moins peut être couplée avec un dispositif d'entraînement et de freinage (11) commandé.

5. Dispositif de freinage selon les revendications précédentes, caractérisé en ce que les différentes positions (9, 10, 19) du corps de blocage (6) sont contrôlées par des indicateurs de position (16) réglables et en ce que ceux-ci servent à commander les signaux de travail.

6. Dispositif de freinage selon la revendication 5, caractérisé en ce que le dispositif de blocage (6) et/ou sa chaîne de support (5) est équipé d'un émetteur de signaux (15) circulant qui communique, par des récepteurs de signaux (16) fixes, la position (9, 10, 19) correspondante du dispositif de blocage (6) à un dispositif de commande et/ou à un calculateur.

7. Dispositif de freinage selon les revendications 1 et 2, caractérisé en ce que le corps de blocage (6) est guidé sur un chariot linéaire, le long de la voie de transport (2), dans un mouvement d'aller et retour.

8. Dispositif de freinage selon la revendication 7, caractérisé en ce que le chariot linéaire avec le corps de blocage (6) accélérable en retour, envoie celui-ci ensuit contre les récipients (8, 8') et freine ainsi la rangée de récipients reprise, accélère éventuellement à nouveau puis peut retourner dans sa position initiale, le corps de blocage (6) étant reconduit à l'extérieur de la voie des récipients.
